# EUROPEAN PATENT SPECIFICATION

(11) **EP 1 292 516 B1**
(45) Date of publication and mention of the grant of the patent: **09.11.2005**
(21) Application number: 01940797.2
(22) Date of filing: 21.06.2001
(51) Int. Cl.: B65D 88/12

(54) **CONTAINER SUPPORTS**
CONTAINERTRÄGER
SUPPORTS POUR CONTENEURS

(30) Priority: 21.06.2000 GB 0015032
(43) Date of publication of application: 19.03.2003
(73) Proprietor: Patten, Francis David, Corrigham, Essex SS17 9BZ (GB); Kavanagh, Nicholas Michael, Kent ME12 2LX (GB); Tomkins, Philip, Dovercourt, Dover CO12 3RW (GB)
(72) Inventor: Patten, Francis David, Corrigham, Essex SS17 9BZ (GB); Kavanagh, Nicholas Michael, Kent ME12 2LX (GB); Tomkins, Philip, Dovercourt, Dover CO12 3RW (GB)
(74) Representative: Greene, Simon Kenneth
(86) International application number: PCT/GB2001/002742
(87) International publication number: WO 2001/098181

(56) References cited:
- EP-A- 0 069 043
- DE-A- 3 327 787
- DE-A- 4 101 238
- DE-A- 19 533 066
- US-A- 5 275 301

## Description

The present invention relates to methods for stacking containers, container supports useable in such methods and container carriers incorporating such supports.

Containerised cargo transportation using rigid stackable containers is widespread, as it offers many advantages over the handling of loose cargo. Ship-bome containerised transport can roughly be classified into one of two groups. The first of these is termed "lift-on-lift-off" or "lo-lo" and involves the loading, by lifting, of containers into the specially fitted holds of ships where the containers are vertically stacked one atop another. The second is called "roll-on-roll-off" or "ro-ro" and involves the longitudinal loading of containers, by trailer on to flat decks. In ro-ro transport, containers are connected onto wheeled trailers, generally termed slave trailers, that are towed into the ship using tug vehicles.

Space is often used more efficiently in lo-lo transport, thereby giving a lower cost of transport, but loading and unloading of the cargo in port is slow as it must be done using cranes starting with the topmost container of any stack. Conversely, ro-ro transportation offers swift loading/unloading but less efficient use of space. In consequence, ro-ro transportation tends to be used where speed of delivery is paramount, but there is usually a higher unit cost.

When transporting via lo-lo ships, the containers must be of complimentary sizes to allow stacking. To this end standardised containers (generally 6m [20 foot] and 12m [40 foot] long x 2.44m high x 2.44m wide) were developed which had anchoring means at the eight comers that cooperated with standardised fittings. However, in ro-ro transport the absence of vertical stacking has meant that the size of the containers is limited only by their need for compatibility with onward transportation infrastructure. This has led to the stretching of containers and now a variety of differently sized. containers are commonly in use, for example 6m, 7.15m, 7.45m, 9m 12m and 13.6m.

Many ro-ro ships, in particular those most recently built, have cargo decks possessing ceiling heights that are sufficiently high so as to permit two-high vertical stacking of containers on each single slave trailer.

As with lo-lo shipping, in ro-ro shipping vertically stacked containers must be fixed together. Whilst it is easy to interconnect closely similar length containers that possess matching locking points, such as those of 6m, 7.15m and 7.45m, these same containers are not compatible for stacking with the longer containers of 9m, 12m and 13.6m length. This is due to the longer containers not being equipped with locking points between those at their corners. Such additional locking points are not installed on the longer containers because structural reinforcing would be necessary which would add too much weight to the construction and this weight would detract from the carrying capacity of the containers. Short containers are also generally filled with densely packed cargo such as liquids or bulk powders, and so often have a greater weight than the longer containers which are generally filled with lighter cargo. Therefore, even if additional locking points were to be added to the longer containers, it would generally be unsafe to load the shorter containers on top of the longer containers owing to the resultant high centre of gravity and consequential instability of the combination.

Containers must be double stacked before loading onto the ro-ro ship. Owing to shortage of time prior to the ship sailing, it is rarely possible for such stacking to be done when the total complement of containers booked for the ship is finally available, and the optimum combination of containers can be determined. Instead, stacking is more likely to be done as and when containers arrive at the port before shipping. In this scenario, using existing technology, stacking opportunities are much reduced due to the previously mentioned weight restrictions and the low ratio of matching locking points that will be encountered.

Furthermore, if a long container is stacked on a short container, even if a low enough centre of gravity is maintained, the long container will overhang at least one end of the short container. This overhang causes shearing forces at weak points on the upper container, even assuming that the container has fixing points capable of co-operating with those of the lower container.

EP 69043 describes a rollable trailer for loading ships having a pair of supports for supporting a second level of containers. The supports comprise a pair of uprights connected by a beam.

The present invention aims to overcome the limitations and drawbacks of container carriage in the inter-modal transport industry, permitting the flexible double stacking of containers to improve efficiency, having application. in road-bome, water-borne and rail-borne operations as well as within transport depot and port operations.

Therefore according to the present invention there is provided a cargo container support in accordance with claim 1 for use in conjunction with a container carrier having mounting points co-operable with corresponding mounts provided on a container. The container may be secured to the carrier, the lower end of the container support having means connectable to the carrier, and the upper end of the support defining a pair of container mounting points releasably engageable with a container so that in use when a short container is loaded directly upon the carrier, a longer container may be loaded on the short container with a portion overhanging the short container and being supported by the support and attached to the mounting points thereof.

The support may comprise a pair of interconnected vertical uprights, with the pair of container mounting points being respectively provided at or adjacent the upper ends thereof, and the lower ends of the uprights being attached to the carrier: The interconnection of the uprights may be achieved by joining the lower ends of the uprights with a lower horizontal beam, and joining the upper ends with an upper horizontal beam. The strength of the structure may be enhanced by the provision of cross bracing between the uprights.

Nowadays, almost all containers are connected using standard twist lock mechanisms, so it is preferred that connections between the support and the carrier and/or between the support and a container are achieved using such twist-lock mechanisms. As these are well known in the art, they will not be described in further detail here.

In order to enhance the stability of a container support, lateral steadying means may be provided at the lower end of the support. Conveniently, these may comprise a lateral member extending generally horizontally from the lower end of the support and in use being adjacent and resting on the carrier. A triangulation strut may be connected between the lateral member and part of the support above the level of the lateral member. Preferably the outer end of the lateral member is provided with mountings for attachment to the carrier, for example to at least one other twist lock point on the carrier.

The container support may be releasably connectable to the carrier using two or more opposed mounting points. In practice, the container support will need sufficient strength to support a container and as such it will tend to be too heavy for easy manual handling. Therefore, the support may be provided with fork lifting points to permit its powered mounting and dismounting from the carrier.

Alternatively the support could be permanently connected to the carrier. However, a fixed vertical support would prevent the carrier from being loaded with a long container in the lower position. Therefore it is highly preferred, that such a permanently connected container support is hingedly connected to the carrier. Furthermore, it may more preferably be hingeable through 90° between a folded configuration parallel to the carrier whereat the support does not interfere with loading of a container and an erected configuration substantially perpendicular to the carrier whereat the support may engage an overhanging container. Other mechanisms could equally be employed to move a container support integral with the cargo carrier between its folded and erected configurations.

When the container support is to be removable from the carrier, its strength and rigidity may be enhanced by providing adjacent, and connected to, the first pair of vertical uprights a second pair similar to the first pair, together forming a cuboid configuration. Such a configuration tends to remove the need for lateral steadying means. To enhance the versatility of the container support a second pair of container mounts may be provided on the upper end of the second pair of vertical uprights. These could help support containers of a variety of lengths.

Containers vary not only in their length, but also in their height. It is also know for them to vary widthways, but this is far less common due to maximum width restrictions applicable in road and rail transport. In the present invention, it is important that the height of the container support is the same as the height of the short container. Otherwise, the stacked combination may be unstable, or the connection points will not match closely enough to permit joining. Therefore the height of the container support is adjustable to accommodate containers of varying heights. Furthermore, mounting points adapted to allow attachment of various different width containers may also be provided.

Such height adjustment may be achieved in a variety of ways. For example, a plurality of predefined heights (corresponding to a range of preferred container heights) may be set before a container is connected to the top. Alternatively, the height may be adjusted after connection to the longer container and then set.

Preferably, the container support may comprise an upper portion that carries the mounting points for releasable engagement with the supported container, and a lower portion carrying the means connectable to the carrier. The upper and lower portions may be connected in such a way that they are capable of relative movement to adjust the overall height of the support. The support must still be capable of carrying a vertical load when set to a particular height. The present invention can use any suitable variable height setting technology. It is preferred that the container support has biasing means to urge the upper portion toward the lower surface of the supported container. The upper portion of the container support could then be locked relative to the lower portion once the desired height is achieved. Springs or pistons could be used as biasing means. As a container is lowered into such a support, the biased upper portion would engage the container before the container was fully seated on the lower container. The container's weight would act against the bias to move the upper portion toward the lower portion. Once the upper container was seated on the lower container the upper portion could be locked relative to the lower portion.

According to the present invention there is also provided a carrier whenever incorporating a support as hereinbefore described. Such a carrier could comprise a road trailer or slave trailer for use in moving cargo containers. Alternatively, a simple sled without wheels might also be used.

According to the present invention there is yet further provided a method of stacking two cargo containers having different lengths on a container carrier, which method comprises: mounting a first container on the cargo carrier; connecting said first container to the cargo carrier, mounting a second container on the first container which second container is longer than the first container so that a part of the length of the second container overhangs the first container; and supporting the over-hanging part of the second container with a container support connectable to the container carrier and the second container.

The method could utilise any container supports as previously described, whether they are integral with the cargo carrier or removably-connectable thereto. If the supports are removable, the method would include the additional step of positioning the support on the cargo carrier, and attaching thereto, which would usually be done prior to mounting the second container. If the support is part of the cargo carrier, the method generally includes a step of erecting the support from its stored position to its normal position. The method could also include a step of adjusting the height of the support to match that of the first shorter container.

In order to better understand the present invention, but by way of example only, various embodiments will now be described with reference to the accompanying drawings in which:
Figure 1 is a perspective view of a comparative example;
Figure 2 is a perspective view of an embodiment similar to that of Figure 1 but having an adjustable height;
Figure 3 is a side view of the arrangement of Figure 1 being used to support a long container on top of a short container;
Figure 4 is a side view of an other arrangement similar to Figure 1, but incorporating lateral steadying means, being used to support a long container on top of a short container;
Figure 5 is a perspective view of a further arrangement of the present invention;
Figure 6 is a side view of the arrangement of Figure 5 being used to support a long container on top of a short container;
Figure 7 is perspective view of a further embodiment of support that is hingedly-connected to the trailer; and,
Figure 8 is a perspective view of the embodiment of figure 7 being used to support a long container on top of a short container.

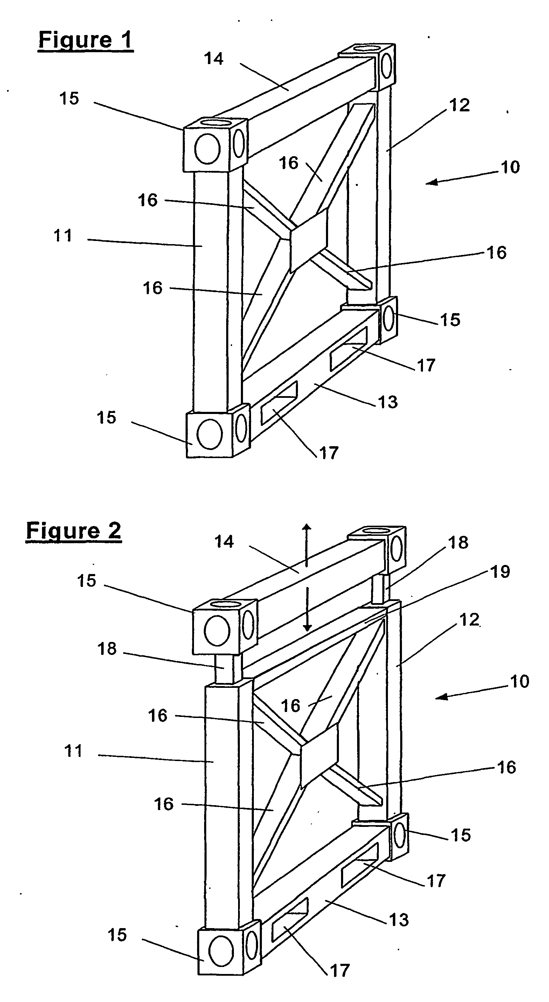

Figure 1 shows a view of a container support generally indicated 10. The container support 10 comprises a pair of uprights 11 and 12, which are connected together at their lower ends by a lower horizontal beam 13, and at their upper ends by an upper horizontal beam 14. Standard twist-lock connection points 15 are provided at the upper and lower ends of each upright 11 and 12. The two lower twist-lock points 15 are configured for attachment to the carrier, and the two upper ones are configured for connection to a supported container.

Diagonal bracing members 16 are provided between the uprights to strengthen the container support. Also, apertures 17 are provided in the lower horizontal beam 13 to permit the engagement of the container support 10 with the forks of a fork-lift truck. This allows the container support to be easily mounted and removed from a carrier as required.

Figure 2 shows an embodiment similar to that shown in Figure 1, and like parts will be given like reference numerals. The embodiment of Figure 2 differs in that sliding members 18 are located for vertical movement in the uprights 11 and 12. These sliding members are attached to the upper horizontal beam 14 and allow alteration of the vertical position of the horizontal beam 14 with respect to the remainder of the support. A bar 19 is connected between the uprights to provide enhanced strength. Spring biasing means (not shown) are provided to generally urge the upper horizontal beam 14 and sliding members upward to engage a container. The position of the sliding members 18 and horizontal beam 14 relative to the uprights can be fixed by locking means (not shown) so that once the desired height is achieved the support can be fixed.

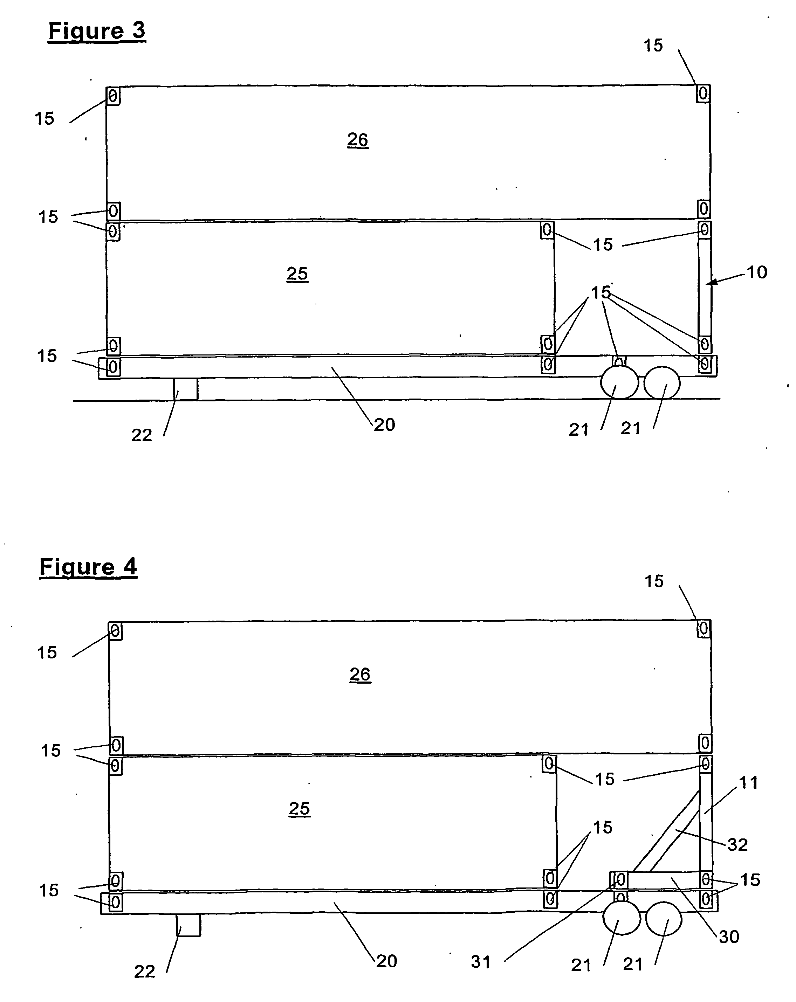

In Figure 3 a carrier in the form of a slave trailer 20 is shown loaded with two containers. The slave trailer is mounted on wheels 21 at the rear end, and a stand 22 is provided at the front to support the trailer 20 approximately level with the ground. To move the trailer, a tug (not shown) is connected in a conventional way to the front end thereof, so lifting the stand 22 from the ground and allowing the trailer to be towed on the wheels 21.

The trailer shown is of a standard design, and incorporates a number of twist-lock points 15, to allow the trailer to carry a variety of different length containers. A short container 25 is loaded on to the trailer 20 and is connected thereto using at least four twist-lock points. A long container 26 is then loaded on top of the short container 25. The twist-locks 15 on one end of the long container are connected to the twist-locks on one end of the short container. Due to the greater length of the long container 26, the other end of the long container overhangs the short container. Few, if any, containers are provided with twist-locks at points along their length intermediate their ends, and as such there are no co-operating twist-lock points to connect the long container to the end of the short container that it overhangs. Instead, in the present invention, a container support 10 is connected to the twist-lock points at the rear end of the trailer, or to a pair of twist-lock points at a suitable point, before loading of the longer container 26. After the subsequent loading of the longer container, the twist-lock points at the upper end of the container support 10 are connectable to the twist-lock points on the overhanging end of the long container. The long container is thereby connected securely for transit and furthermore its overhanging end is properly supported by the container support.

A minor modification is shown in Figure 4. In this the container support is provided with lateral steadying means which extends inwardly, with respect to the trailer, from the lower end of the support. The steadying means comprise two lateral members 30 (only one can be seen) one end of each being connected to the container support, and the other ends being provided with twist-lock points 31 for connection to the trailer, and triangulation struts 32 (only one can be seen) between the lateral members 30 and the uprights 11 and 12. The steadying means enhance the stability of the container support by resisting lateral displacement of the support when a container is loaded thereon.

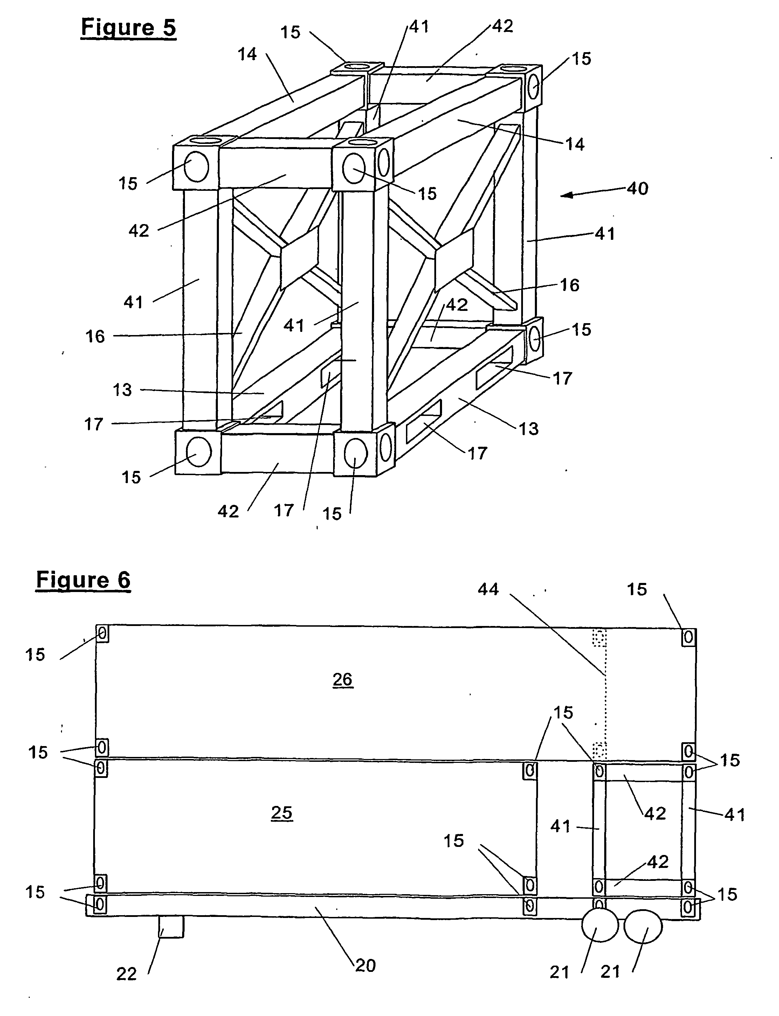

A further support is shown in Figure 5. Where possible like parts will be given like reference numerals. This support 40 essentially comprises a pair of the first described example joined side by side to form a container support of a generally cuboid configuration. Two pairs of vertical uprights 41 are connected together at their lower ends by lower horizontal beams 13, and at their upper ends by upper horizontal beams 14. Standard twist-lock points 15 are provided at the upper and lower ends of each upright 41. The four lower twist-lock connectors 15 are configured for attachment to a slave trailer, and the four upper twist-lock connectors are configured for connection to a supported container.

Diagonal bracing members 16 are provided between the uprights 41 to strengthen the container support. Also, apertures 17 are provided in both the lower horizontal beams 13 to permit the engagement of the container support 40 with the forks of a fork-lift truck. This allows the container support to be easily mounted and removed from a carrier as required. Corresponding upper and lower comers of the vertical uprights 41 are connected using linking bars 42.

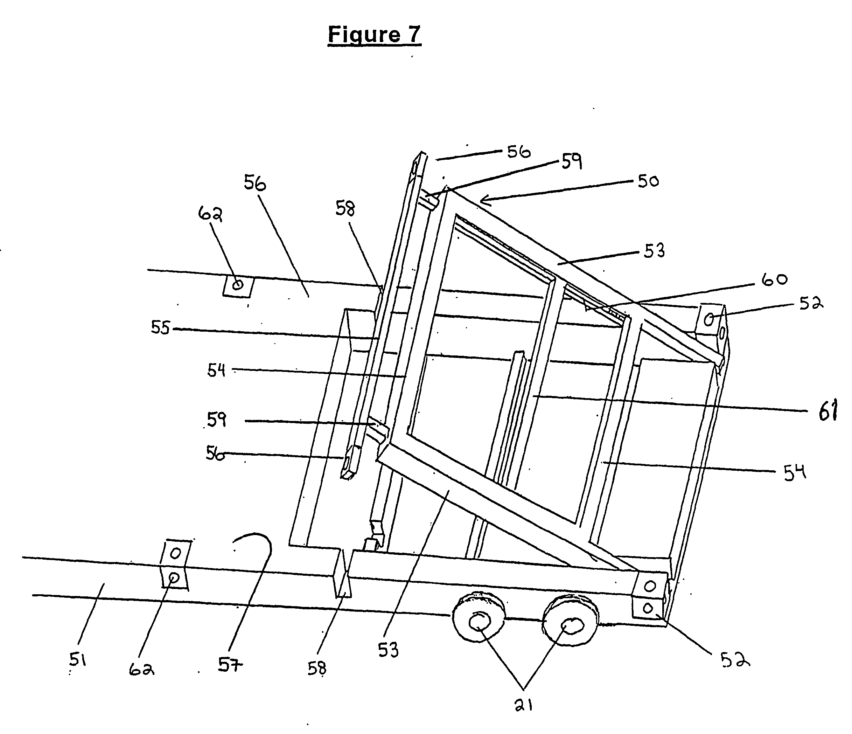

As can be seen in Figure 6, all four of the container support's twist-lock points 15 can be connected to the trailer 20. This provides a similar stabilising effect as does the lateral bracing described above. A long container 26 can be supported on a short container 25 in the same way as describe above. In addition, this second embodiment of container support 40 provides two additional points for connection thereto by a long container 26. For example the long container may extend as far as the rearmost pair of twist-lock points, or (as is shown by dotted lines 44) a container that is not as long may be connected to the other pair of twist-lock points on the container support.

The arrangements described above are primarily intended for use with existing slave trailers, however the present invention may be incorporated into newly constructed trailers, or retro-fitted on suitable existing ones. The removable container support described above can be completely removed from the trailer so permitting a long container to be directly mounted on the trailer. A permanently connected support should still permit full length containers to be fixed to the trailer as well as supporting a long container on a short one.

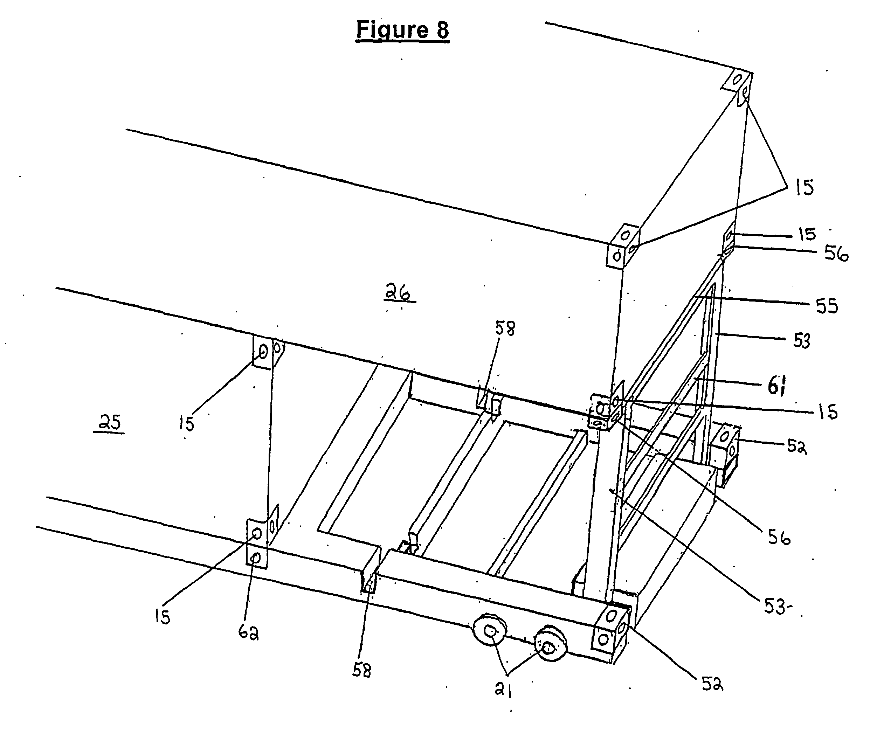

Figures 7 and 8 show perspective views of a further embodiment of container support (generally indicated 50) which forms an integral part of the trailer 51 with which it is used. The container support is hingeable between a folded configuration whereat it lies parallel the trailer and does not inhibit the connection of a container to the trailer's rear twist-lock points 52. If the support is to be used, it is moved from the folded configuration to a vertical erected configuration. Figure 7 shows the support in a position intermediate the folded and erected configurations.

This embodiment of container support 50 comprises a pair of uprights 53 hingedly connected to the trailer 51 at or adjacent one end thereof. The two uprights 53 are interconnected by cross-beams 54, and a height adjusting top-portion 55 is provided at the free end of the container support. Twist-lock attachment points 56 are provided on the outer ends of the top portion and these are for connection to a supported container 26 as shown in Figure 8. The trailer 51 is provided with recesses to accommodate the container support 50 in the folded configuration so that no part of the container support obstructs the attachment of a long container direct to the upper surface 57 of the trailer 51. Recesses 58 are provided to receive twist-lock points 56 on the laterally extending ends of the top portion 55.

Sliding members 59 that are attached to the top portion 55 engage in corresponding grooves 60 formed in the uprights 53. The height of the container support 50 may be adjusted by positioning and then securing the top portion and sliding members. To add rigidity to the sliding members 59, whose upper ends are connected by the top portion 55, are also interconnected by a further cross beam 61.

When the container support is in its erected configuration it can be used, as shown in Figure 8, to support the overhanging part of a long container 26 above a short container 25. The short container is attached to the trailer by inter-engagement of its lower twist-lock points 15 with corresponding intermediate twist-lock points 62 on the trailer. A long container 26 with standard twist-lock points 15 is then loaded onto the short container. The lower twist-lock points at one end (not shown) of the long container are connected to the upper twist-lock points on the corresponding end (not shown) of the short container. The lower twist-lock points at the other end of the long container are connected to the twist-lock attachment points 56 on the container support.

As with the removable versions of the present invention the strength of the folding container support may be enhanced by the provision of lateral steadying means. In this embodiment a folding triangulation strut or brace (not shown) may be attached between the trailer and the upright 53.

When a trailer and container support according to the present invention are used, a high degree of flexibility is achieved. With the container support in the folded configuration, or removed, the trailer will operate as a conventional trailer, but in the erected configuration, or with the container support attached, multiple container combinations can easily be stacked on a single trailer to dramatically increase the loading efficiency.

The twist-lock points illustrated in the accompanying drawings are simplified as they do not form part of the invention. Clearly any suitable interlocking mechanisms could be used. Nevertheless, it is preferred that male coupling members be provided on the container supports to engage the ports usually found on existing containers. These male parts may be rotating and locked by handles connected thereto.

In addition, the invention has been described predominantly with respect to supporting containers in trailers for ro-ro shipping. However, container supports, in particular the folding embodiments and methods of stacking according to the present invention are equally applicable to other areas of container transport. In particular, folding supports could be built on to road trailers and train cars designed to carry containers. This would permit the same degree of versatile stacking as in ro-ro transport.

## Claims

1. A cargo container support (10), for use in conjunction with a container carrier having mounting points co-operable with corresponding mounts provided on a container whereby the container may be secured to the carrier;
comprising a pair of interconnected vertical uprights (11, 12);
the lower end of the container support having means connectable to the carrier, and
the upper end of the container support defining a pair of container mounting points (15) releasably engageable with a container,
**characterised in that** the height of the container support is adjustable, wherein in use when a short container is loaded directly upon the carrier, a longer container may be loaded on the short container with a portion overhanging the short container and being supported by the support and attached to the mounting points thereof.

2. A container support according to claim 1 further comprising sliding members (18) located for vertical movement in the uprights and a locking means for fixing the position of the uprights in the sliding members.

3. A container support as claimed in claims 1 or 2, wherein a plurality of predefined heights may be set before connection to the longer container.

4. A container support as claimed in claims 1 or 2, wherein the height is adjustable after connection to the longer container.

5. A container support as claimed in any preceding claim, wherein the pair of container mounting points (15) are respectively provided at or adjacent the upper ends of the vertical uprights (11, 12), and the lower ends of the vertical uprights have mounting points (15) for attachment to the carrier.

6. A container support as claimed in claim 5, wherein the lower ends of the uprights (11, 12) are joined by a lower horizontal beam (13), and the upper ends of the uprights are joined by an upper horizontal beam (14).

7. A container support as claimed in claim 5 or claim 6 wherein cross bracing (16) is provided between the uprights (11, 12).

8. A container support as claimed in any of the preceding claims in which the connections between the support and the carrier and/or between the support and a container are achieved using twist-lock mechanisms (15).

9. A container support as claimed in any of the preceding claims, wherein lateral steadying means (30, 32) are provided at the lower end of the support.

10. A container support as claimed in claim 9, wherein the lateral steadying means comprise a lateral member (30) attached to the lower end of the support which in use lies adjacent the carrier; and a triangulation strut (32) connected between the lateral member and a part of the support above the level of the horizontal member.

11. A container support as claimed in claim 10 wherein the outer end of the lateral member (30) is provided with mountings (31) for attachment to the carrier.

12. A container support as claimed in any of the preceding claims, wherein the support is releasably connected to two or more opposed mounting points of the carrier (20).

13. A container support as claimed in claim 12, wherein the support is provided with fork lifting points (17) to permit mounting and dismounting thereof from the carrier.

14. A container support as claimed in any of claims 1 to 9, wherein the support is permanently connected to the carrier (20).

15. A container support as claimed in claim 14, wherein the support is hingedly-connected to the carrier (20).

16. A container support as claimed in claim 15, wherein the support is hingeable through 90° between a folded configuration parallel to the carrier whereat the support does not interfere with loading of a container and an erected configuration substantially perpendicular to the carrier whereat the support may support an overhanging longer container mounted on a shorter container.

17. A container support as claimed in any of claims 1 to 8, wherein a second pair of vertical uprights (41) similar to the first pair is provided adjacent and connected to the first pair, and together these form a rectangular configuration.

18. A container support as claimed in claim 17 wherein a second pair of container mounts (15) are provided on the upper end of the second pair of vertical uprights.

19. A carrier for supporting two vertically stacked containers comprising a base section (20) to which a shorter container may be attached and a container support (10) as claimed in any preceding claim connected thereto.

20. A method of stacking two cargo containers having different lengths on a cargo carrier, which method comprises: mounting a first container (25) on the cargo carrier (20); connecting said first container (25) to the cargo carrier (20); mounting a second container (26) on the first container which second container is longer than the first container so that a part of the length of the second container (26) overhangs the first container; and supporting the over-hanging part of the second container (26) with a container support (10) by connecting the container support (10) to the container carrier (20) and the second container (26).

21. A method as claimed in claim 20, wherein a separate container support (10), not normally mounted on the container carrier (20), is mounted on and connected to the container carrier (20) before loading of the second container (26).

22. A method as claimed in claim 21, wherein a container support (10) forming part of the cargo carrier (20) is moved from a stored position whereat it does not obstruct the loading of the first container to an erected position whereat it may support the second container (26).

23. A method as claimed in any of claims 20 to 22, including adjusting the height of the container support (10) to match the height of the first container (25).

24. A method as claimed in any of claims 20 to 23, wherein a container support (10) as claimed in any of claims 1 to 18 is used.

25. A method as claimed in any of claims 20 to 24, wherein temporary connections between the first container (25) and the container carrier (20); between the first and second containers (25, 26); and between the second container (26) and container support (10) are effected by twist lock connectors (15).

## Patentansprüche

1. Frachtcontainerauflager (10) zur Verwendung im Zusammenhang mit einem Containerträger, der Montagestellen besitzt, welche mit zugeordneten Aufhängevorrichtungen zusammenwirken, die an einem Container vorgesehen sind, wodurch der Container an dem Träger befestigt werden kann;
mit einem Paar miteinander verbundenen vertikalen Ständern (11, 12);
wobei das untere Ende des Containerauflagers eine mit dem Träger verbindbare Einrichtung besitzt, und
wobei das obere Ende des Containerauflagers ein Paar Containermontagepunkte (15) bildet, die lösbar mit einem Container in Eingriff bringbar sind,
**dadurch gekennzeichnet, dass** die Höhe des Containerauflagers einstellbar ist, wobei beim Gebrauch, wenn ein kurzer Container direkt auf den Träger geladen ist, ein längerer Container auf dem kurzen Container mit einem Abschnitt ladbar ist, der den kurzen Container überragt und von dem Auflager gehalten und an dessen Montagestellen angebracht ist.

2. Containerträger nach Anspruch 1, weiterhin mit Gleitelementen (18), die zur vertikalen Bewegung in den Ständern angeordnet sind, und mit einer Arretierungseinrichtung zur Befestigung der Lage der Gleitelemente in den Ständern.

3. Containerträger nach Anspruch 1 oder 2, bei dem zahlreiche vorbestimmte Höhen vor der Verbindung mit dem längeren Container einstellbar sind.

4. Containerträger nach Anspruch 1 oder 2, bei dem die Höhe nach Verbindung mit dem längeren Container einstellbar ist.

5. Containerträger nach einem vorangehenden Anspruch, bei dem das Paar Containermontagestellen (15) jeweils an oder neben den oberen Enden der vertikalen Ständer (11, 12) angeordnet ist, und die unteren Enden der vertikalen Ständer Montagestellen (15) zur Anbringung an dem Träger besitzen.

6. Containerträger nach Anspruch 5, bei dem die unteren Enden der Ständer (11, 12) mit einem unteren horizontalen Träger (13) und die oberen Enden der Ständer mittels eines oberen horizontalen Trägers (14) verbunden sind.

7. Containerträger nach Anspruch 5 oder 6, bei dem zwischen den Säulen (11, 12) ein Querverbund (16) vorgesehen ist.

8. Containerträger nach einem der vorangehenden Ansprüche, bei dem die Verbindung zwischen dem Auflager und dem Träger und/oder zwischen dem Auflager und einem Container unter Verwendung von Containereckverbindungsmechanismen (15) vorgenommen sind.

9. Containerträger nach einem der vorangehenden Ansprüche, bei dem seitliche Abspanneinrichtungen (30, 32) an dem unteren Ende des Auflagers vorgesehen sind.

10. Containerträger nach Anspruch 9, bei dem die seitlichen Abspanneinrichtungen ein seitliches Element (30), das an dem unteren Ende des Auflagers angebracht ist, welches beim Gebrauch neben der Halterung liegt, und eine Dreipunktverstrebung (32) aufweisen, die zwischen dem seitlichen Element und einem Abschnitt des Auflagers oberhalb des Niveaus des horizontalen Elements angeschlossen ist.

11. Containerträger nach Anspruch 10, bei dem das äußere Ende des seitlichen Elements (30) mit Einrichtung (31) zur Anbringung an dem Träger versehen sind.

12. Containerträger nach einem der vorangehenden Ansprüche, bei dem das Auflager lösbar mit zwei oder mehr gegenüberliegenden Montagestellen des Trägers (20) verbunden ist.

13. Containerträger nach Anspruch 12, bei dem der Träger mit Gabelhupstellen (17) für das Montieren und Abmontieren von dem Träger versehen ist.

14. Containerträger nach einem der Ansprüche 1 bis 9, bei dem das Auflager permanent mit dem Träger (20) verbunden ist.

15. Containerträger nach Anspruch 14, bei dem das Auflager an dem Träger (20) mit einem Schwenkgelenk verbunden ist.

16. Containerträger nach Anspruch 15, bei dem das Auflager über 90° zwischen einer gefalteten Konfiguration parallel zu dem Träger, an der das Auflager nicht beim Laden eines Containers stört, und einer aufgerichteten Konfiguration im Wesentlichen senkrecht zu dem Träger schwenkbar ist, an der das Auflager einen überhängenden längeren Container aufzunehmen vermag, der auf einem kürzeren Container montiert ist.

17. Containerträger nach einem der Ansprüche 1 bis 8, bei dem ein zweites Paar vertikaler Ständer (41) ähnlich dem ersten Paar neben dem ersten Paar mit diesem verbunden vorgesehen ist und diese gemeinsam eine rechtwinklige Konfiguration bilden.

18. Containerträger nach Anspruch 17, bei dem ein zweites Paar Containerbefestigungen auf dem oberen Ende des zweiten Paars der vertikalen Ständer vorgesehen ist.

19. Halter zur Lagerung zweier vertikal gestapelter Container, mit einem Grundabschnitt (20), an dem ein kürzerer Container anbringbar ist, und mit einem Containerträger (10) nach einem vorangehenden Anspruch, der damit verbunden ist.

20. Verfahren zum Stapeln zweier Stückgutcontainer mit unterschiedlichen Längen auf einem Stückgutträger, wobei zu dem Verfahren gehören: Montieren eines ersten Containers (25) auf dem Stückgutträger (20); Verbinden des ersten Containers (25) mit dem Stückgutträger (20); Montieren eines zweiten Containers (26) auf den ersten Container, wobei der zweite Container derart länger ist als der erste Container, dass ein Abschnitt der Länge des zweiten Containers (26) den ersten Container überragt; und Lagerung des überhängenden Abschnitts des zweiten Containers (26) mit einem Containerauflager (10) durch Verbinden des Containerauflagers (10) mit dem Containerträger (20) und dem zweiten Container (26).

21. Verfahren nach Anspruch 20, bei dem ein separates Containerauflager (10), das normalerweise nicht auf dem Containerträger (20) montiert ist, auf dem Containerträger (20) montiert und mit diesem verbunden wird, ehe der zweite Container (26) beladen wird.

22. Verfahren nach Anspruch 21, bei dem ein Containerauflager (10), das einen Abschnitt des Frachtträgers (20) bildet, von einer abgestellten Stellung, wo er das Laden des ersten Containers nicht beeinträchtigt, in eine aufrechte Stellung bewegt wird, in der er den zweiten Container (26) zu lagern vermag.

23. Verfahren nach einem der Ansprüche 20 bis 22, mit einem Einstellen der Höhe des Containerauflagers (10) zum Anpassen an die Höhe des ersten Containers (25).

24. Verfahren nach einem der Ansprüche 20 bis 23, bei dem ein Containerauflager (10) gemäß einem der Ansprüche 1 bis 18 verwendet wird.

25. Verfahren nach einem der Ansprüche 20 bis 24, bei dem temporäre Verbindungen zwischen dem ersten Container (25) und dem Containerträger (20), zwischen dem ersten und zweiten Container (25, 26) und zwischen dem zweiten Container (26) und dem Containerauflager (10) durch Containereckverbindungen vorgenommen werden.

## Revendications

1. Support de conteneur (10), pour une utilisation en association avec un chariot porte-conteneur possédant des points de montage pouvant coopérer avec des montures correspondantes disposées sur un conteneur, moyennant quoi le conteneur peut être fixé au chariot ;
comprenant une paire de montants verticaux interconnectés (11, 12) ;
l'extrémité inférieure du support de conteneur possédant des moyens pouvant être connectés au chariot, et
l'extrémité supérieure du support de conteneur définissant une paire de points de montage de conteneur (15) engageables de façon libérable avec un conteneur,
**caractérisé en ce que** la hauteur du support de conteneur est ajustable, et **en ce que** lorsque, à l'utilisation, un conteneur court est chargé directement sur le chariot, un conteneur plus long peut être chargé sur le conteneur court avec une partie surplombant le conteneur court et supportée par le support et attachée à ses points de montage.

2. Support de conteneur selon la revendication 1, comprenant en outre des éléments coulissants (18) situés pour un mouvement vertical dans les montants et un moyen de verrouillage pour fixer la position des montants dans les éléments coulissants.

3. Support de conteneur selon les revendications 1 ou 2, dans lequel une pluralité de hauteurs prédéfinies peuvent être fixées avant connexion au conteneur plus long.

4. Support de conteneur selon les revendications 1 ou 2, dans lequel la hauteur est ajustable après connexion au conteneur plus long.

5. Support de conteneur selon l'une quelconque des revendications précédentes, dans lequel les points de la paire de points de montage de conteneur (15) sont respectivement disposés sur ou adjacents aux extrémités supérieures des montants verticaux (11, 12), et les extrémités inférieures des montants verticaux ont des points de montage (15) pour fixation au chariot.

6. Support de conteneur selon la revendication 5, dans lequel les extrémités inférieures des montants (11, 12) sont réunies par une poutre horizontale inférieure (13) et les extrémités supérieures des montants verticaux sont réunies par une poutre horizontale supérieure (14).

7. Support de conteneur selon la revendication 5 ou la revendication 6, dans lequel des croisillons (16) sont disposés entre les montants (11, 12).

8. Support de conteneur selon l'une quelconque des revendications précédentes, dans lequel les connexions entre le support et le chariot et/ou entre le support et un conteneur sont obtenues au moyen de mécanismes à verrou tournant (15).

9. Support de conteneur selon l'une quelconque des revendications précédentes, dans lequel des moyens de stabilisation latéraux (30, 32) sont disposés à l'extrémité inférieure du support.

10. Support de conteneur selon la revendication 9, dans lequel les moyens de stabilisation latéraux comprennent un élément latéral (30) attaché à l'extrémité inférieure du support qui, à l'utilisation, se trouve à une position adjacente au chariot, et une traverse de triangulation (32) connectée entre l'élément latéral et une partie du support au-dessus du niveau de l'élément horizontal.

11. Support de conteneur selon la revendication 10, dans lequel l'extrémité extérieure de l'élément latéral (30) est munie de montures (31) pour fixation au chariot.

12. Support de conteneur selon l'une quelconque des revendications précédentes, dans lequel le support est connecté de façon libérable à deux points de montage opposés ou plus du chariot (20).

13. Support de conteneur selon la revendication 12, dans lequel le support est muni de points de passage de fourche (17) pour permettre leur montage et leur démontage du chariot.

14. Support de conteneur selon l'une quelconque des revendications 1 à 9, dans lequel le support est connecté de façon permanente au chariot (20).

15. Support de conteneur selon la revendication 14, dans lequel le support est connecté par charnières au chariot (20).

16. Support de conteneur selon la revendication 15, dans lequel le support peut pivoter sur charnières sur jusqu'à 90° entre une configuration repliée parallèle au chariot, dans laquelle le support n'interfère pas avec le chargement d'un conteneur, et une configuration érigée sensiblement perpendiculaire au chariot, dans laquelle le support peut supporter un conteneur plus long en surplomb monté sur un conteneur plus court.

17. Support de conteneur selon l'une quelconque des revendications 1 à 8, dans lequel une deuxième paire de montants verticaux (41) similaires à la première paire est disposée à une position adjacente à, et connectée à, la première paire, celles-ci formant ensemble une configuration rectangulaire.

18. Support de conteneur selon la revendication 17, dans lequel une deuxième paire de montures de conteneur (15) est disposée sur l'extrémité supérieure de la deuxième paire de montants verticaux.

19. Chariot pour supporter deux conteneurs empilés verticalement, comprenant une section de base (20) à laquelle un conteneur plus court peut être attaché et un support de conteneur (10) selon l'une quelconque des revendications précédentes qui lui est liée.

20. Procédé d'empilement de deux conteneurs ayant des longueurs différentes sur un chariot porte-charge, ledit procédé comprenant : le montage d'un premier conteneur (25) sur le chariot porte-charge (20) ; la connexion dudit premier conteneur (25) au chariot porte-charge (20) ; le montage d'un deuxième conteneur (26) sur le premier conteneur, lequel deuxième conteneur est plus long que le premier conteneur, de telle sorte qu'une partie de la longueur du deuxième conteneur (26) surplombe le premier conteneur ; et le fait de supporter la partie en surplomb du deuxième conteneur (26) avec un support de conteneur (10) par connexion du support de conteneur (10) au chariot porte-conteneur (20) et au deuxième conteneur (26).

21. Procédé selon la revendication 20, dans lequel un support de conteneur séparé (10), qui n'est pas normalement monté sur le chariot porte-conteneur (20), est monté sur et connecté au chariot porte-conteneur (20) avant chargement du deuxième conteneur (26).

22. Procédé selon la revendication 21, dans lequel un support de conteneur (10) formant une partie du chariot porte-charge (20) est déplacé d'une position rangée à laquelle il n'obstrue pas le chargement du premier conteneur à une position érigée à laquelle il est à même de supporter le deuxième conteneur (26).

23. Procédé selon l'une quelconque des revendications 20 à 22, comprenant l'ajustement de la hauteur du support de conteneur (10) pour la faire correspondre à la hauteur du premier conteneur (25).

24. Procédé selon l'une quelconque des revendications 20 à 23, dans lequel un support de conteneur (10) selon l'une quelconque des revendications 1 à 18 est utilisé.

25. Procédé selon l'une quelconque des revendications 20 à 24, dans lequel des connexions temporaires entre le premier conteneur (25) et le chariot porte-conteneur (20) ; entre les premier et deuxième conteneurs (25, 26) ; et entre le deuxième conteneur (26) et le support de conteneur (10) sont effectuées par des connecteurs à verrou tournant (15).
